Europäisches Patentamt

European Patent Office

Office européen des brevets

(11) Veröffentlichungsnummer: **0 361 164**
**A1**

(12) **EUROPÄISCHE PATENTANMELDUNG**

(21) Anmeldenummer: 89116543.3

(22) Anmeldetag: 07.09.89

(51) Int. Cl.5 **G01B 7/00**

(30) Priorität: 09.09.88 DE 3830806

(43) Veröffentlichungstag der Anmeldung:
04.04.90 Patentblatt 90/14

(84) Benannte Vertragsstaaten:
CH DE ES FR GB IT LI

(71) Anmelder: **MAHO Aktiengesellschaft**
**Postfach 1280 Tiroler Strasse 85**
**D-8962 Pfronten(DE)**

(72) Erfinder: **Wilfried, Friedrich**
**Senkelweg 21**
**D-8959 Seeg(DE)**

(74) Vertreter: **Patentanwälte Beetz sen. - Beetz**
**jun. Timpe - Siegfried - Schmitt-Fumian-**
**Mayr**
**Steinsdorfstrasse 10**
**D-8000 München 22(DE)**

(54) **Fühler zum Abtasten von Oberflächen.**

(57) Gegenstand der Erfindung ist ein Fühler zum Abtasten von Oberflächen insbesondere für Digitalisier- und Kopierwerkzeugmaschinen, der einen axial verschiebbar gelagerten Tastfinger (6) mit einem daran angeordneten Meßelement (10) zum Erfassen seiner jeweiligen Axialstellung aufweist. Dieser Tastfinger (6) ist in einem mehrteiligen Halter (16, 17) axial verschiebbar gelagert, welcher über mehrere achsparallele elastische Stäbe (22, 23) im Gehäuse (1) quer zur Tastfingerachse auslenkbar befestigt ist. Neben dem Halter sind im Gehäuse mehrere Meßelemente zum Erfassen der seitlichen Auslenkbewegungen des Halters und des Tastfingers (6) vorgesehen, denen Dämpfungsglieder zugeordnet sind. Erfindungsgemäß ist der Halter (16, 17) über ein erstes System von federelastischen Stäben (23) an einem Träger (24) aufgehängt, welcher über ein zweites System von elastischen Stäben (25) am Gehäuseboden (4) abgestützt ist. Die Meßelemente (33, 35) für die radialen Auslenkbewegungen des Tastfingers (6) sind zwischen dem Halter (16, 17) und dem Träger (24) angeordnet.

Fig.1

## Fühler zum Abtasten von Oberflächen

Die Erfindung betrifft einen Fühler zum Abtasten von Oberflächen insbesondere für Digitalisier- und Kopierwerkzeugmaschinen, bestehend aus einem axial verschiebbar gelagerten Tastfinger mit einem Meßelement zum Erfassen seiner jeweiligen Axialstellung, aus einem Halter für den Tastfinger, der über mehrere achsparallele elastische Stäbe im Gehäuse quer zur Tastfingerachse auslenkbar befestigt ist, und aus mehreren neben dem Halter im Gehäuse angeordneten Meßelementen zum Erfassen der seitlichen Auslenkbewegungen des Halters und des Tastfingers, denen je ein Dämpfungsglied zugeordnet ist.

Aus der DE-OS 29 35 178 ist ein derartiger Fühler zum Abtasten von Werkstück- bzw. Modell-Oberflächen bekannt, dessen Tastfinger axial verschiebbar in einem kegelförmigen Halter angeordnet ist, und an seinem oberen Ende ein Meßelement in Form einer Tauchspule aufweist. Der Halter ist an mehreren achsparallelen elastischen Stäben aufgehängt, die mit ihrem oberen Ende an einer Stirnplatte des hohlzylindrischen Gehäuses befestigt sind. An dem aus dem Halter herausragenden oberen Endteil des Tastfingers greifen radiale Arme paarweise und diametral gegenüberliegend an, die mit ihren anderen Enden jeweils an den beiden freien Enden einer querliegenden Kolbenstange eines unter Federspannung stehenden Dämpfungskolbens befestigt sind. Zum Erfassen der seitlichen Auslenkbewegungen des Tastfingers ist eine Tauchspule parallel zu jeder Kolbenstange angeordnet. Nachteilig ist die relativ große Bauhöhe dieses Tastfühlers, die durch die notwendige Länge der elastischen Stäbe und durch die Anordnung des Halters außerhalb des Mantelgehäuses bedingt wird. Darüberhinaus sind die Mittel zum Erfassen der seitlichen Auslenkbewegungen des Tastfingers und zu dessen Zentrierung in der Längsachse konstruktiv aufwendig und kompliziert.

Aus der US-PS 3 673 695 ist ein Tastfühler bekannt, dessen in einem hohlzylindrischen Halter gelagerter Tastfinger ebenfalls axial verschiebbar im Fühlergehäuse angeordnet ist und an seinem Ende eine Tauchspule aufweist. Für die seitlichen Versetzbewegungen des Tastfingers weist der Halter einen scheibenförmigen Radialflansch auf, der an seinen beiden Stirnseiten über Kugellager bewegbar im Gehäuse gelagert ist. Die Rückstellung des Tastfingers bzw. des Halters in seine Mittellage erfolgt durch mehrere diametral gegenüberliegende Druckfedern. Auch diese Tastfühlerkonstruktion ist außerordentlich aufwendig und teuer.

Schließlich ist aus der DE-PS 908 350 eine Vorrichtung zum Abtasten von Modelloberflächen bekannt, deren zentraler und axial verschiebbarer Tastfinger gegen die Wirkung mehrerer Kraftsysteme quer zu seiner Längsachse auslenkbar ist. Die Halterung des Tastfingers erfolgt über elastisch verformbare achsparallele Stangen, welche seitliche Auslenkbewegungen des Tastfingers zulassen und eine Rückholwirkung auf diesen Tastfinger ausüben. Schwierigkeiten bereitet bei diesem bekannten Tastgerät jedoch die wiederholbare genaue Zentrierung des Tastfingers in der Längsachse nach den Auslenkbewegungen.

Aufgabe der Erfindung ist es, einen Tastfühler zum Abtasten von Werkstück- oder Modell-Oberflächen insbesondere für Digitalisier- und Kopierwerkzeugmaschinen zu schaffen, der bei hochgenauer Erfassung von dreidimensionalen Oberflächenkonturen einfach und kompakt aufgebaut ist.

Diese Aufgabe wird erfindungsgemäß dadurch gelöst, daß der Tastfinger-Halter über ein erstes System von elastischen Stäben an einem Träger aufgehängt ist, daß der Träger über ein zweites System von elastischen Stäben am Gehäuseboden abgestützt ist und daß die Meßelemente für die radialen Auslenkbewegungen des Tastfingers zwischen dem Kalter und dem Träger angeordnet sind.

Durch die Verwendung von zwei gesonderten Systemen von elastischen Stäben wird die Bauhöhe des Fühlers wesentlich vermindert, was insbesondere bei Digitalisier-und Kopier-Fräsmaschinen von erheblicher praktischer Bedeutung ist. Die Zwischenschaltung des gesonderten Trägers eröffnet die Möglichkeit einer besonders günstigen Anordnung der Meßelemente für die radialen Auslenkbewegungen des Tastfingers innerhalb des Gehäuses. Da der Träger im Gehäuse über das eine System von elastischen Stäben radial bewegbar gehaltert und mit dem Tastfinger-Halter über das andere System von elastischen Stäben verbunden ist, ergibt sich eine Untersetzung der seitlichen Auslenkbewegungen des Tastfingers mit der vorteilhaften Möglichkeit einer Verwendung von entsprechend kleineren und konstruktiv einfacheren Meßelementen für die Erfassung der seitlichen Auslenkbewegungen des Trägers. Dadurch wird die Verwendung von berührungslosen induktiven Meßelementen möglich.

Eine allseitig besonders günstige Abstützung des Halters mit dem darin in Wälzlagern axial verschiebbar gelagerten Tastfinger wird gemäß einer zweckmäßigen Ausgestaltung der Erfindung dadurch erreicht, daß die elastischen Stäbe des ersten und des zweiten Systems in abwechselnder Folge auf einem Kreisring angeordnet sind, wobei zu jedem System jeweils vier Stäbe gehören und die insgesamt acht Stäbe um jeweils 45° gegeneinander winkelversetzt angeordnet sind.

Ein zur kompakten Ausführung und geringen Bauhöhe wesentlich beitragendes Merkmal des neuen Fühlers liegt in der Anordnung der Meßspalte der berührungslosen Meßelemente für die seitlichen Versatzbewegungen des Tastfingers unter einem spitzen Winkel zur Vertikalen, wodurch ein weiterer Untersetzungseffekt der Auslenkbewegungen des Tastfingers erzielt wird. Durch die nahezu vollständige Anordnung des Halters im Innenraum des Gehäuses wird die Bauhöhe des Fühlers weiter verringert und gleichzeitig ein wirksamer Schutz gegen Beschädigungen erreicht.

Eine konstruktiv einfache und hochwirksame Dämpfung der Auslenkbewegungen des Tastfingers wird gemäß einer weiteren zweckmäßigen Ausgestaltung der Erfindung dadurch erreicht, daß am oberen Ende des im Halter axial verschiebbar gelagerten Tastfingers radiale Querstreben befestigt sind, deren äußere Enden über die Dämpfungsglieder am hohlzylindrischen Gehäuse angeschlossen sind, wobei jedes Dämpfungsglied zweckmäßigerweise einen am Ende der Querstreben befestigten Zapfen aufweist, der in einen am Gehäuse montierten geschlossenen Flüssigkeitsbehälter eintaucht.

Die Masse des die seitlichen Auslenkbewegungen mit ausführenden Halters kann kleingehalten werden, wenn dieser Halter gemäß einer weiteren zweckmäßigen Ausgestaltung aus zwei konischen Hohlkörpern besteht, die mit ihrer breiten Stirnseite aneinander befestigt sind und an ihren schmaleren Enden je eine Wälzlagerbuchse für den hohlen Schaft des Tastfingers aufweisen. Durch den relativ großen axialen Abstand der beiden Wälzlagerbuchsen ergibt sich eine sichere und hochgenaue Führung des Tastfingers bzw. seines Hohlschafts. Zweckmäßig ist zwischen diesem Hohlschaft und einem inneren Anschlag im oberen Hohlkörper des Halters eine axial wirkende Feder angeordnet, die bei axialen Einschiebebewegungen des Tastfingers zusammengedrückt wird.

Weitere Merkmale und Besonderheiten des erfindungsgemäßen Fühlers ergeben sich aus der Beschreibung eines in der beiliegenden Zeichnung dargestellten Ausführungsbeispiels. Es zeigen:

    Fig. 1 Einen Tastfühler in teilgeschnittener Seitenansicht;

    Fig. 2 den Tastfühler nach Fig. 1 im Querschnitt II-II;

    Fig. 3 den Tastfühler nach Fig. 1 im Querschnitt III-III;

    Fig. 4 einen vergrößerten Ausschnitt IV-IV in Fig. 2.

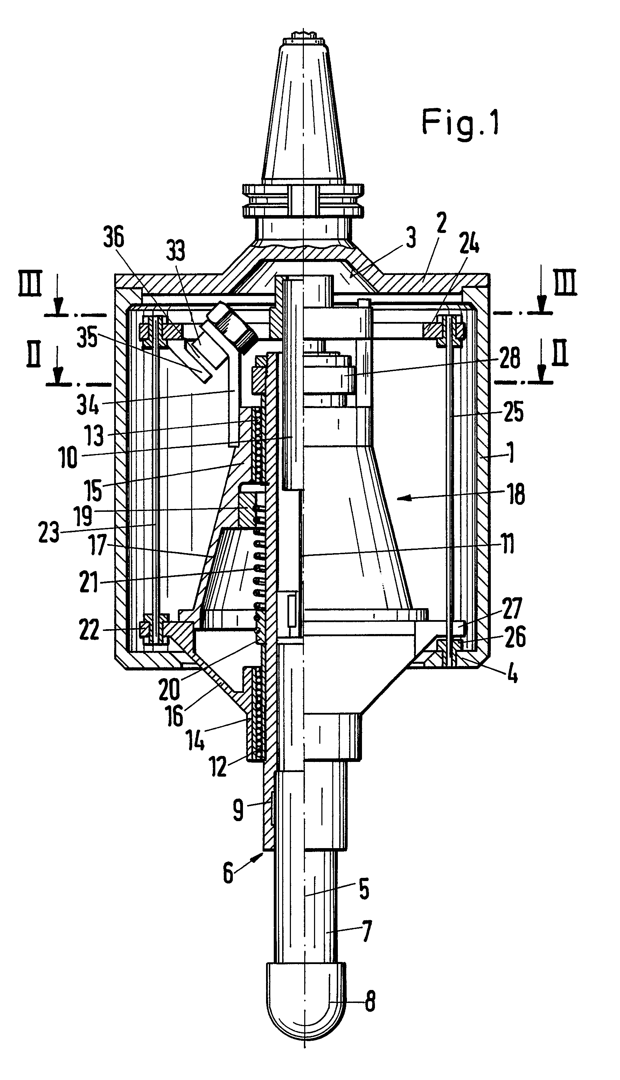

Der in Fig. 1 in seiner Gesamtheit dargestellte Fühler enthält einen zylindrischen Gehäusemantel 1, der an seiner Oberseite durch eine mit einer zentralen Ausweitung 3 versehene Abdeckplatte 2 abgeschlossen ist. Ein herkömmlicher Spannkegel ist am auskragenden zentralen Teil dieser Abdeckplatte 2 befestigt, so daß der Fühler in die Werkzeugaufnahme z.B. einer Arbeitsspindel eingespannt werden kann. Die obere Deckplatte 2, der Zylindermantel 1 und ein an dessen unterem Ende angeformter Randboden 4 bilden ein Gehäuse.

Ein in der Längsachse 5 angeordneter Tastfinger 6 besteht aus einem stabförmigen Einsatz 7 mit gewölbter Kappe 8 und aus einem hohlzylindrischen Schaft 9, in dessen unterem freien Ende der Einsatz 7 auswechselbar in einer vorgegebenen Stellung arretiert ist. Im Inneren des Schaftes ist ferner eine Tauchspule 10 über einen zentralen Stift 11 mit radialem Spalt festgelegt. Der Hohlschaft 9 des Tastfingers 6 ist axial verschiebbar in einem unteren und einem oberen Kugellager 12, 13 gelagert, die in je einer Lagermuffe 14, 15 eines aus zwei konischen Hohlkörpern 16, 17 zusammengebauten Halters 18 angeordnet sind. Zwischen einem Anschlag 19 im Inneren des oberen konischen Hohlkörpers 17 und einem außen am Hohlschaft 9 befestigten Gegenlager 20 ist eine Schraubenfeder 21 eingespannt, die auf den Tastfinger 6 eine nach auswärts gerichtete Kraft ausübt.

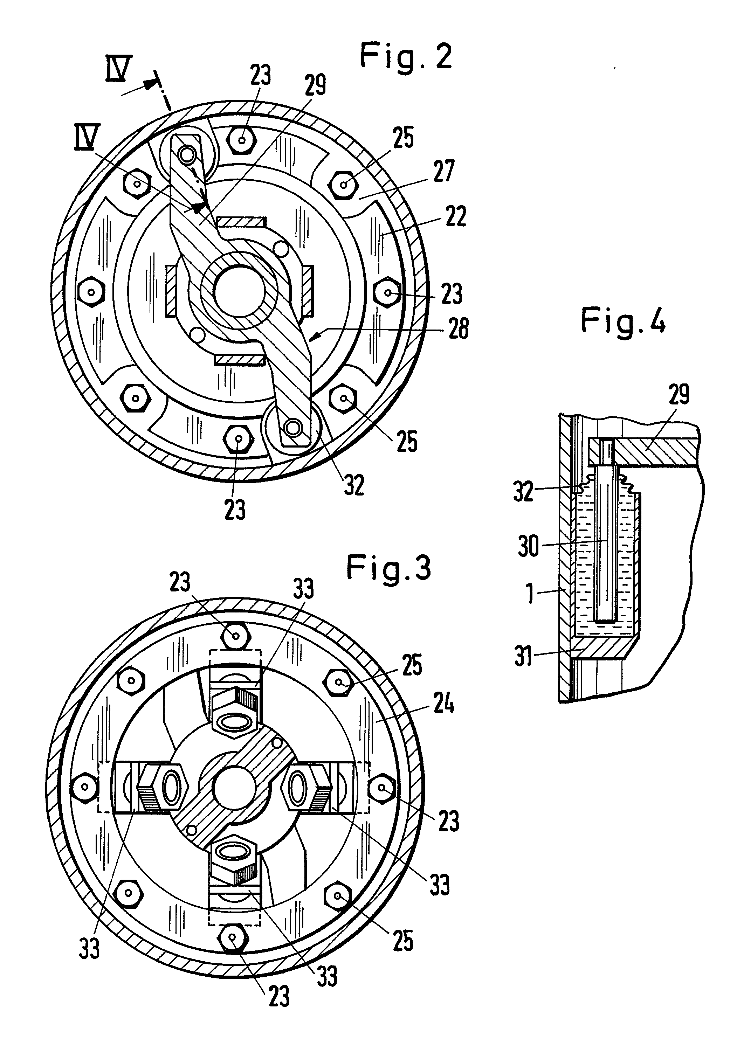

An einem Radialflansch 22 des unteren konischen Hohlkörpers 16 sind - bei dem dargestellten Ausführungsbeispiel vier - federelastische Stäbe 23 um jeweils 90° gegeneinander versetzt mit ihren unteren Enden befestigt. Die oberen Enden dieser Stäbe 23 sitzen in einem ringscheibenförmigen Halter 24, der in einer Radialebene seitlich verschiebbar im oberen Teil des Gehäusemantels 1 angeordnet ist. Jeweils vier dieser federelastischen Stäbe 23 sind paarweise diametral gegenüberliegend in achsparalleler Ausrichtung vorgesehen und bilden ein erstes Aufhängungssystem für den Halter 16, 17. Wie aus der winkelversetzt zum linken Teil der Fig. 1 dargestellten rechten Hälfte ersichtlich, sind am ringscheibenförmigen Träger 24 weitere federelastische Stäbe 25 mit ihren oberen Enden befestigt, deren untere Enden in dem nach radial innen eingebogenen Gehäuserand 4 festgelegt sind. Die Halterung der federelastischen Stäbe 23, 25 in den jeweiligen Bauteilen 4, 22 bzw. 24 erfolgt durch Arretiermuffen 26. Wie aus den Fig. 2, 3 ersichtlich sind die federelastischen Stäbe 23 und 25 in abwechselnder Folge um jeweils 45° gegeneinander winkelversetzt angeordnet, wobei die unteren Enden der Stäbe 25 Ausschnitte 27 im Ringflansch 22 des unteren konischen Hohlkörpers 16 durchragen.

Wie in den Fig. 1 und 2 gezeigt, ist am oberen Ende des Hohlschaftes 9 ein Tragelement 28 befestigt, das zwei an einer zentralen Hülse angeformte diametral gegenüberliegende abgewinkelte Radialstege 29 besitzt. Am freien Ende jedes dieser Radialstege 29 ist ein Zapfen 30 achsparallel zur Längsachse 5 befestigt, der in einen an der Innenfläche des Gehäusemantels 1 befestigen Dämpfungsbehälter 31 eintaucht. Dieser Dämpfungsbehälter ist mit einer Flüssigkeit gefüllt und oben durch ein flexibles Element 32. z.B. einen Balg, abgeschlossen. wie dies in Fig. 4 im einzelnen dargestellt ist.

Wie aus den Fig. 1 und 3 ersichtlich, sind insgesamt vier Meßköpfe 33 jeweils paarweise gegenüberliegend an der Lagermuffe 15 des oberen konischen Formkörpers 17 über axiale Streben mit abgewinkelten Endabschnitten befestigt. Die Meßköpfe 33 liegen in den die federelastischen Stäbe 23 verbindenden Radialebenen innerhalb des ringscheibenförmigen Trägers 24, wie dies in Fig. 1 dargestellt ist. Zwischen der um 45° zur Längsachse 5 geneigten Meßfläche jedes Meßkopfes 33 und einem parallel zu dieser, d.h. um 45° geneigten. Oberfläche je eines Meßplättchens 35 wird ein Meßspalt 36 gebildet. Diese Meßplättchen 35 sind an der Unterseite des ringscheibenförmigen Trägers 24 befestigt.

Die Meßköpfe 33 und die Tauchspule 10 sind über nicht dargestellte Leitungen an einer Auswerteinrichtung mit elektronischen Speichern für die erhaltenen Meßwerte angeschlossen.

Bei dem erfindungsgemäßen Fühler in der obigen Ausführung ergibt sich eine hochwirksame Dämpfung der horizontalen und vertikalen Bewegungen des Tastfingers und auch seiner Torsionsschwingungen um die Längsachse 5. Aufgrund der Ineinanderschachtelung der Federstab-Systeme können auch relativ große seitliche Auslenkungen von bis zu 5 mm mit induktiven berührungslosen Meßelementen erfaßt werden, obwohl derartige Meßelemente nur Wegstrecken bis zu 1,4 mm mit der notwendigen Genauigkeit erfassen können. Diese vorteilhafte Möglichkeit ergibt sich durch das hohe Untersetzungsverhältnis aufgrund einmal der Ineinanderschachtelung der beiden Federstab-Systeme und der Ausrichtung der Meßelemente 33. 35 unter 45° zur Längsachse sowie schließlich durch die Anordnung der Meßfederplättchen am kreisringförmigen Halter 24. Das erfindungsgemäße Prinzip hat weiter den Vorteil, daß auch andere Meßsysteme. z.B. digitale Maßstäbe, berührungslose Lasermessungen od.dgl., zum Erfassen der axialen und radialen Bewegungen des Tastfingers eingesetzt werden können.

## Ansprüche

1. Fühler zum Abtasten von Oberflächen, insbesondere für Kopierwerkzeugmaschinen, bestehend
aus einem axial verschiebbar gelagerten Tastfinger mit einem Meßelement zum Erfassen seiner jeweiligen Axialstellung,
aus einem Halter für den Tastfinger, der über mehrere achsparallele, federelastische Stäbe im Gehäuse quer zur Tastfingerachse auslenkbar befestigt ist,
aus mehreren neben dem Halter im Gehäuse angeordneten Meßelementen zum Erfassen der seitlichen Auslenkbewegungen des Halters sowie des Tastfingers und
aus Dämpfungselementen für die seitlichen Auslenkbewegungen des Halters und der axialen Auslenkbewegung des Tastfingers,
dadurch gekennzeichnet,
daß der Halter (16, 17) über ein erstes System von federelastischen Stäben (23) an einem Träger (24) aufgehängt ist,
daß der Träger (24) über ein zweites System von federelastischen Stäben (25) am Gehäuseboden (4) abgestützt ist und
daß die Meßelemente (33, 35) für die radialen Auslenkbewegungen des Tastfingers (6) an dem Halter (16, 17) und dem Träger (24) angeordnet sind.

2. Fühler nach Anspruch 1, dadurch gekennzeichnet, daß die federelastischen Stäbe (23, 25) des ersten und zweiten Halterungssystems in abwechselnder Folge auf einem Kreisring achsparallel zueinander und um gleiche Winkel gegeneinander versetzt angeordnet sind.

3. Fühler nach Anspruch 1 oder 2. dadurch gekennzeichnet, daß der Träger (24) eine formsteife Ringscheibe ist.

4. Fühler nach einem der Ansprüche 1 bis 3. dadurch gekennzeichnet, daß die Meßspalte (36) der berührungslosen Meßelemente (33, 35) für die seitlichen Auslenk- bzw. Versatzbewegungen des Tastfingers (6) in einem spitzen Winkel zur Längsachse (5) ausgerichtet sind.

5. Fühler nach einem der Ansprüche 1 bis 4, dadurch gekennzeichnet, daß am oberen Ende des im Halter (16, 17) gelagerten Tastfingers (6) radiale Querstreben (29) befestigt sind, die an ihren Enden über je ein Dämpfungselement (30, 31) an der Innenwand des Zylindermantels befestigt sind, wobei jedes Dämpfungselement aus einem an der Querstrebe (29) befestigten Zapfen (30) sowie aus einem mit Flüssigkeit gefüllten geschlossenen Dämpfungsbehälter (32) besteht.

6. Fühler nach einem der Ansprüche 1 bis 5, dadurch gekennzeichnet, daß der Halter (16, 17) aus zwei konischen Hohlkörpern (16, 17) besteht, die mit ihrer breiten Stirnseite aneinander befestigt sind und an ihren schmaleren Enden je eine Wälzlagerbuchse (14, 15) für den hohlen Schaft (9) des Tastfingers (6) aufweisen.

7. Fühler nach Anspruch 6, dadurch gekennzeichnet, daß zwischen dem Hohlschaft (9) des Tastfingers (6) und einem Anschlag (19) im oberen Hohlkörper (17) des Halters eine axial wirkende Feder (21) angeordnet ist.

8. Fühler nach Anspruch 6 oder 7, dadurch gekennzeichnet, daß insgesamt vier Meßköpfe (33) über abgewinkelte Axialstreben (34) an der oberen Lagermuffe (15) des Halters unter einem Winkel von ca. 45° befestigt sind.

9. Fühler nach einem der Ansprüche 1 bis 8, dadurch gekennzeichnet, daß die Tauchspule (10) des axial wirksamen Meßelements im hohlen Schaft (9) des Tastfingers (6) festgelegt ist.

Fig.1

Fig. 2

Fig.4

Fig.3

Europäisches
Patentamt

**EUROPÄISCHER RECHERCHENBERICHT**

Nummer der Anmeldung

EP 89 11 6543

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-2 935 178 (HEYLIGENSTAEDT & CO.) * Insgesamt * | 1 | G 01 B 7/00 |
| Y | WO-A-8 805 524 (FIDIA S.p.A.) * Figuren 1-8; Seite 2, Zeile 9 - Seite 9, Zeile 29; Ansprüche 1-3,5-7,13,19,20 * | 1 | |
| A | GB-A-2 163 554 (MITUTOYA Mfg CO. LTD) * Figuren 1,5,6,7; Seite 1, Zeile 105 - Seite 3, Zeile 44 * | 1,4,8 | |
| A | FR-A-1 392 379 (L. GIARDINO) * Figur 1; Seite 2, rechte Spalte, Zeilen 5-41 * | 1 | |
| A | EP-A-0 093 299 (FA. CARL ZEISS) * Figuren 1-4; Seite 2, Zeile 16 - Seite 6, Zeile 1; Ansprüche 1,2 * | 1-3,7 | |
| A | DE-A-3 031 069 (HEYLIGENSTAEDT & CO.) * Ansprüche; Figur 1 * | 1,3 | **RECHERCHIERTE SACHGEBIETE (Int. Cl.5)** |
| A | DE-A-3 506 892 (CARL ZEISS) * Insgesamt * | 1-3 | G 01 B 5/00 G 01 B 7/00 G 01 B 3/00 |
| A | WO-A-8 804 401 (RENISHAW PLC) * Insgesamt * | 1-3 | B 23 Q 35/00 B 23 Q 1/00 |

Der vorliegende Recherchenbericht wurde für alle Patentansprüche erstellt

| Recherchenort | Abschlußdatum der Recherche | Prüfer |
|---|---|---|
| DEN HAAG | 14-12-1989 | BROCK T.J. |

EPO FORM 1503 03.82 (P0403)